(19) Europäisches Patentamt
European Patent Office
Office européen des brevets

(11) **EP 4 738 445 A1**

(12) **EUROPEAN PATENT APPLICATION**

(43) Date of publication:
**06.05.2026 Bulletin 2026/19**

(21) Application number: **25212663.6**

(22) Date of filing: **31.10.2025**

(51) International Patent Classification (IPC):
**H01M 4/04** (2006.01) **H01M 10/0562** (2010.01)
**H01M 10/0585** (2010.01)

(52) Cooperative Patent Classification (CPC):
**H01M 10/0562; H01M 4/043; H01M 10/0585;**
H01M 2300/0068

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.11.2024 KR 20240154347**

(71) Applicant: **SAMSUNG SDI CO., LTD.
Yongin-si, Gyeonggi-do 17084 (KR)**

(72) Inventors:
• **LEE, WonGi
17084 Yongin-si, Gyeonggi-do (KR)**
• **CHOI, Jinkyu
17084 Yongin-si, Gyeonggi-do (KR)**

(74) Representative: **Michalski Hüttermann & Partner
Patentanwälte mbB
Kaistraße 16A
40221 Düsseldorf (DE)**

(54) **ALL-SOLID-STATE BATTERY AND METHOD OF FABRICATING THE SAME**

(57)     Disclosed are all-solid-state batteries and their fabrication methods. The mehtod of fabricating an all-solid-state battery comprises preparing a first substrate and a second substrate, preparing a first electrode plate by forming a first mixture layer on the first substrate, preparing a second electrode plate by forming a second mixture layer on the second substrate, forming a first electrode by transferring the second mixture layer of the second electrode plate to the first mixture layer of the first electrode plate, and performing a post-pressurization step to pressurize the first electrode. The forming of the first electrode comprises performing a pre-pressurization step in which the first electrode plate and the second electrode plate are pressurized while facing each other. The post-pressurization step further comprises cooling the second electrode plate.

FIG. 5

10

**Description**

CROSS-REFERENCE TO RELATED APPLICATION

This application claims priority to Korean Patent Application No. 10-2024-0154347 filed on November 4, 2024 in the Korean Intellectual Property Office.

BACKGROUND

The present disclosure relates to an all-solid-state battery and a method of fabricating the same.

Recently, with the rapid spread of battery using electronic devices, such as mobile phones, laptop computers, and electric vehicles, there is a rapidly increasing demand for rechargeable batteries with high energy density and high capacity. Therefore, intensive research has been conducted to improve performance of rechargeable lithium batteries.

A rechargeable lithium battery includes a positive electrode, a negative electrode, and an electrolyte, which positive and negative electrodes include an active material in which intercalation and deintercalation are possible, and generates electrical energy caused by oxidation and reduction reactions when lithium ions are intercalated and deintercalated.

Among rechargeable lithium batteries, an all-solid-state battery refers to a battery in which all materials are solid, and particularly, a battery using a solid electrolyte. Such all-solid-state battery exhibits excellent safety due to no risk of electrolyte leakage, and thin-layered battery is readily fabricated.

Various methods to increase a capacity of the all-solid-state battery are being studied, and one approach to increasing capacity within a limited volume is to manufacture an electrode plate with high current density.

SUMMARY

An embodiment of the present disclosure provides an all-solid-state battery with high current density and a method of fabricating the same.

An embodiment of the present disclosure provides an all-solid-state battery with a large coating amount of an active material layer and a method of fabricating the same.

According to an embodiment of the present disclosure, a method of fabricating an all-solid-state battery may comprise: preparing a first substrate and a second substrate; preparing a first electrode plate by forming a first mixture layer on the first substrate; preparing a second electrode plate by forming a second mixture layer on the second substrate; forming a first electrode by transferring the second mixture layer of the second electrode plate to the first mixture layer of the first electrode plate; and performing a post-pressurization step to pressurize the first electrode. The forming of the first electrode may comprise performing a pre-pressurization step in which the first electrode plate and the second electrode plate are pressurized while facing each other. The post-pressurization step may further comprise cooling the second electrode plate.

According to an embodiment of the present disclosure, an all-solid-state battery may comprise: a positive electrode, the positive electrode comprising a positive electrode current collector, a first mixture layer on the positive electrode current collector, and a second mixture layer on the first mixture layer; a solid electrolyte layer on the second mixture layer; and a negative electrode layer on the solid electrolyte layer. The first mixture layer may comprise a first positive electrode active material and a first solid electrolyte. The second mixture layer may comprise a second positive electrode active material and a second solid electrolyte. A weight ratio of the first solid electrolyte in the first mixture layer may be less than a weight ratio of the second solid electrolyte in the second mixture layer.

BRIEF DESCRIPTION OF DRAWINGS

FIG. 1 illustrates a cross-sectional view showing an all-solid-state battery according to an embodiment of the present disclosure.
FIGS. 2A and 2B illustrate flow charts showing a method of fabricating an all-solid-state battery according to an embodiment of the present disclosure.
FIGS. 3 to 7 illustrate cross-sectional views showing a method of fabricating an all-solid-state battery according to an embodiment of the present disclosure.

DETAILED DESCRIPTION OF EMBODIMENTS

In order to sufficiently understand the configuration and effect of the present disclosure, some embodiments of the present disclosure will be described with reference to the accompanying drawings. It should be noted, however, that the present disclosure is not limited to the following exemplary embodiments, and may be implemented in various forms. Rather, the exemplary embodiments are provided only to disclose the present disclosure and let those skilled in the art fully know the scope of the present disclosure.

In this description, it will be understood that, when an element is referred to as being on another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B", "B but not A", and "A and B". The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

In an electrode for an all-solid-state battery including a current collector, a method to increase a battery capacity within a limited volume through design considerations may include increasing a coating amount of an active material layer on a substrate to manufacture an electrode plate with high current density.

An all-solid-state battery and a method of fabricating the same according to an embodiment of the present disclosure may be utilized to increase a coating amount of a battery active material, to achieve uniformity of desired thickness and quality, and to increase current density performance of the battery.

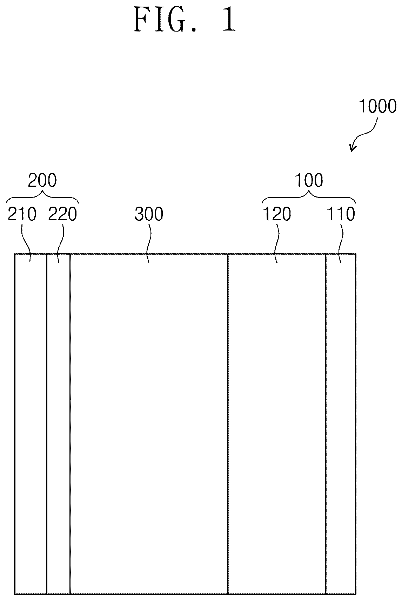

FIG. 1 illustrates an all-solid-state battery according to an embodiment of the present disclosure.

FIG. 1 is a cross-sectional view of an all-solid-state battery 1000 according to an embodiment of the present disclosure.

Referring to FIG. 1, the all-solid-state battery 1000 according to an embodiment may include a positive electrode layer 100, a negative electrode layer 200 opposite to the positive electrode layer 100, and a solid electrolyte layer 300 disposed between the positive electrode layer 100 and the negative electrode layer 200. The present disclosure, however, is not limited thereto, and the all-solid-state battery 1000 may further include an additional functional layer, such as an adhesion enhancement layer, disposed between the positive electrode layer 100 and the solid electrolyte layer 300 or between the negative electrode layer 200 and the solid electrolyte layer 300.

The positive electrode layer 100 according to an embodiment may include a positive electrode current collector 110 and a positive electrode active material layer 120 disposed on the positive electrode current collector 110. The positive electrode active material layer 120 may include a positive electrode active material, a solid electrolyte, a conductive material, and a binder.

The positive electrode current collector 110 may provide a reference surface on which the positive electrode active material layer 120 is disposed. The positive electrode current collector 110 may include a plate or foil including, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

Although not shown, in order to increase adhesion between the positive electrode current collector 110 and the positive electrode active material layer 120, a carbon layer having a thickness of about 0.1 $\mu$m to about 4 $\mu$m may further be disposed between the positive electrode current collector 110 and the positive electrode active material layer 120.

The positive electrode active material may be an active material that can reversibly absorb and desorb lithium ions. The positive electrode active material may include lithium transition metal oxide (e.g., lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide, but the present disclosure is not limited thereto. The positive electrode active material may be used alone or in a mixture of two or more substances.

The positive electrode active material may have a spherical shape. The positive electrode active material may have an oval shape. There may be no limitation on the shape of the positive electrode active material.

The lithium transition metal oxide may be, for example, a compound represented by one of $Li_aA_{1-b}B_bD_2$ (where $0.90 \leq a \leq 1$ and $0 \leq b \leq 0.5$), $Li_aE_{1-b}B_bO_{2-c}D_c$ (where $0.90 \leq a \leq 1$, $0 \leq b \leq 0.5$, and $0 \leq c \leq 0.05$), $LiE_{2-b}B_bO_{4-c}D_c$ (where $0 \leq b \leq 0.5$ and $0 \leq c \leq 0.05$), $Li_aNi_{1-b-c}Co_bB_cD_\alpha$ (where $0.90 \leq a \leq 1$, $0 \leq b \leq 0.5$, $0 \leq c \leq 0.05$, and $0 < \alpha < 2$), $Li_aNi_{1-b-c}Co_bB_cO_{2-\alpha}F_\alpha$ (where $0.90 \leq a \leq 1$, $0 \leq b \leq 0.5$, $0 \leq c \leq 0.05$, and $0 < \alpha < 2$), $Li_aNi_{1-b-c}Mn_bB_cD_\alpha$ (where $0.90 \leq a \leq 1$, $0 \leq b \leq 0.5$, $0 \leq c \leq 0.05$, and $0 < \alpha < 2$), $Li_aNi_{1-b-c}Mn_bB_cO_{2-\alpha}F_\alpha$ (where $0.90 \leq a \leq 1$, $0 \leq b \leq 0.5$, $0 \leq c \leq 0.05$, and $0 < \alpha < 2$), $Li_aNi_bE_cG_dO_2$ (where $0.90 \leq a \leq 1$, $0 \leq b \leq 0.9$, $0 \leq c \leq 0.5$, and $0.001 \leq d \leq 0.1$), $Li_aNi_bCo_cMn_dG_eO_2$ (where $0.90 \leq a \leq 1$, $0 \leq b \leq 0.9$, $0 \leq c \leq 0.5$, $0 \leq d \leq 0.5$, and $0.001 \leq e \leq 0.1$), $Li_aNiG_bO_2$ (where $0.9 \leq a \leq 1$ and $0.001 \leq b \leq 0.1$), $Li_aCoG_bO_2$ (where $0.90 \leq a \leq 1$ and $0.001 \leq b \leq 0.1$), $Li_aMnG_bO_2$ (where

$0.90 \leq a \leq 1$ and $0.001 \leq b \leq 0.1$), $Li_aMn_2G_bO_4$ (where $0.90 \leq a \leq 1$ and $0.001 \leq b \leq 0.1$), $QO_2$, $QS_2$, $LiQS_2$, $V_2O_5$, $LiV_2O_5$, $LiIO_2$, $LiNiVO_4$, $Li_{3-f}J_2(PO_4)_3$ (where $0 \leq f \leq 2$), $Li_{3-f}Fe_2(PO_4)_3$ (where $0 \leq f \leq 2$), and $LiFePO_4$. In the compounds above, "A" may be Ni, Co, Mn, or a combination thereof, "B" may be Al, Ni, Co, Mn, Cr, Fe, Mg, Sr, V, a rare-earth element, or a combination thereof, "D" may be O, F, S, P, or a combination thereof, "E" may be Co, Mn, or a combination thereof, "F" may be F, S, P, or a combination thereof, "G" may be Al, Cr, Mn, Fe, Mg, La, Ce, Sr, V, or a combination thereof, "Q" may be Ti, Mo, Mn, or a combination thereof, "I" may be Cr, V, Fe, Sc, Y, or a combination thereof, and "J" may be V, Cr, Mn, Co, Ni, Cu, or a combination thereof.

The positive electrode active material may include, for example, lithium salt of transition metal oxide having a layered rock salt type structure among lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of cations and anions are arranged displaced from each other by 1/2 of a ridge of a unit lattice. The lithium transition metal oxide having the layered rock salt type structure may be a ternary lithium transition metal oxide, such as $LiNi_xCo_yAl_zO_2$ (NCA) or $LiNi_xCo_yMn_zO_2$ (NCM) (where $0<x<1, 0<y<1, 0<z<1$, and $x+y+z=1$). When the positive electrode active material includes a ternary lithium transition metal oxide having the layered rock salt type structure, the all-solid-state battery 1000 may have increased energy density and improved thermal stability.

The compound included in the positive electrode active material may be covered with a coating layer (not shown). The positive electrode active material may be used in a mixture of the compound and a compound to which the coating layer is added. The coating layer added to a surface of the positive electrode active material may include, for example, oxide, hydroxide, oxyhydroxide, oxycarbonate, or hydrocarbonate of a coating element discussed below. The compound that constitutes the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may include, for example, $Li_2O$-$ZrO_2$ (LZO). A method for forming the coating layer may be selected within any methods that do not adversely affect physical characteristics of the positive electrode active material. The method of forming the coating layer may include, for example, spray coating or immersion.

When the positive electrode active material includes nickel (Ni) as a ternary lithium transition metal oxide such as NCA or NCM, a capacity density of the all-solid-state battery 1000 may increase to reduce metal elution from the positive electrode active material in a charged state. Therefore, the all-solid-state battery 1000 may improve in cycle characteristics in a charged state. The language "cycle characteristics" may refer to properties that indicate the degree to which the all-solid-state battery 1000 is degraded due to charge and discharge. For example, the all-solid-state battery 1000 with high cycle characteristics may degrade less due to charge and discharge, while the all-solid-state battery 1000 with low cycle characteristics may degrade more due to charge and discharge.

The positive electrode active material may have, for example, a spherical or oval particle shape. There is no limitation on a particle diameter and an amount of the positive electrode active material.

The solid electrolyte in the positive electrode active material layer 120 may include a sulfide-based solid electrolyte with excellent lithium ionic conductivity. The sulfide-based solid electrolyte may include, for example, at least one selected from $Li_2S$-$P_2S_5$, $Li_2S$-$P_2S_5$-LiX (where X is a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are each a positive integer, and "Z" is one of Ge, Zn, and Ga), $Li_2S$-$GeS_2$, $Li_2S$-$SiS_2$-$Li_3PO_4$, $Li_2S$-$SiS_2$-$Li_pMO_q$ (where p and q are each a positive integer, and "M" is one of P, Si, Ge, B, Al, Ga, and In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$).

The sulfide-based solid electrolyte may be an argyrodite-type compound including, for example, at least one selected from $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be an argyrodite-type compound including at least one selected from $Li_6PS_5Cl$, $Li_6PS_5Br$, and $Li_6PS_5I$.

Alternatively, the sulfide-based solid electrolyte may be an argyrodite-type compound including $Li_{7-a}M_aPS_{6-c}X_c$ (where $0 \leq a \leq 2$ and $0 \leq c \leq 2$). In the chemical formula above, X may be F, Br, Cl, or a combination thereof. M may be scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type solid electrolyte may have a density of about 1.5 g/cc to about 2.0 g/cc. As the argyrodite-type solid electrolyte has a density of equal to or greater than about 1.5 g/cc, it may be possible to decrease an internal resistance of an all-solid-state battery and to prevent a solid electrolyte layer from short-circuit and penetration caused by the formation of lithium dendrites. The solid electrolyte may have an elastic modulus of, for example, about 15 GPa to about 35 GPa.

The conductive material may have conductivity without causing a chemical change of the all-solid-state battery 1000 to increase conductivity of the positive electrode active material and the solid electrolyte. The conductive material may include a carbon-based material. The conductive material may include, for example, one or more of graphite, carbon black, acetylene black, carbon nano-fiber, and carbon nano-tube.

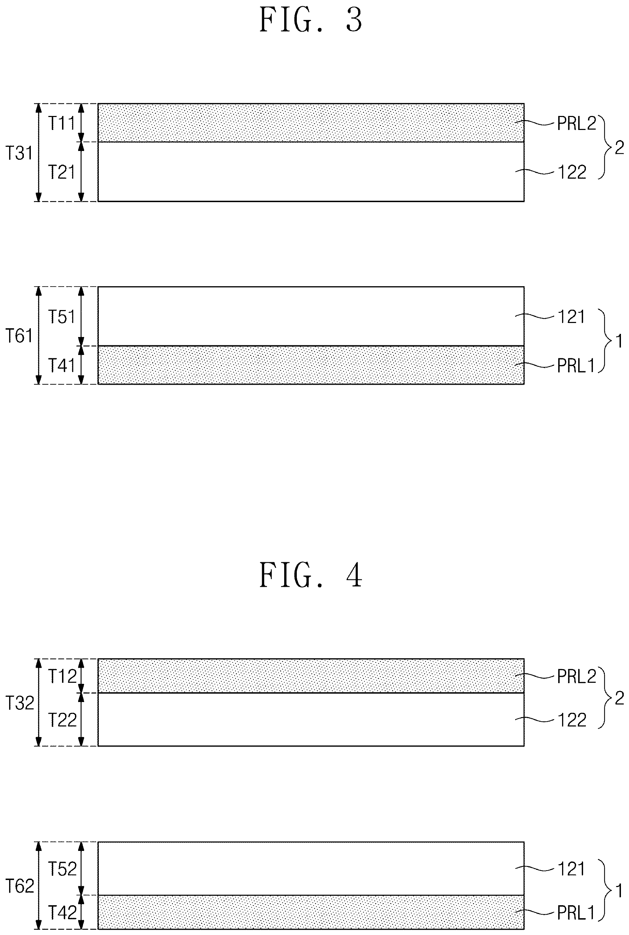

The binder may include a material that adheres to each other the positive electrode active material, the solid electrolyte, and the conductive material and that improves adhesion with a first substrate (see PRL1 of FIG. 3). The binder may include, for example, polyvinylidenefluoride, styrene-butadiene rubber (SBR), polytetrafluoroethylene, vinylidenefluoride/hexafluoropropylene copolymer, polyacrylonitrile, or polymethyl methacrylate.

The solid electrolyte layer 300 may be disposed between the positive electrode layer 100 and the negative electrode layer 200, and may include a sulfide-based solid electrolyte with excellent lithium ionic conductivity. The solid electrolyte included in the solid electrolyte layer 300 may include a material the same as or different from that of the solid electrolyte included in the positive electrode active material layer 120.

The solid electrolyte layer 300 may further include a binder. The binder included in the solid electrolyte layer 300 may include, for example, styrene-butadiene rubber (SBR), polytetrafluoroethylene, polyvinylidenefluoride, or polyethylene, but the present disclosure is not limited thereto. The binder of the solid electrolyte layer 300 may be the same as or different from that of the positive electrode active material layer 120 or that of a coating layer 220 which will be discussed below.

The negative electrode layer 200 may include a negative electrode current collector 210 and a coating layer 220 on the negative electrode current collector 210. The negative electrode current collector 210 may provide a reference surface on which the coating layer 220 is disposed. The negative electrode current collector 210 may include a material that does not react with lithium, for example, a material that does not form an alloy or a compound with lithium. For example, the negative electrode current collector 210 may include at least one metal selected from copper (Cu), stainless steel, titanium (Ti), iron (Fe), cobalt (Co), and nickel (Ni). For example, a thickness of the negative electrode current collector 210 may range from about 1 $\mu$m to about 20 $\mu$m, from about 5 $\mu$m to about 15 $\mu$m, or from about 7 $\mu$m to about 10 $\mu$m.

The negative electrode current collector 210 may be formed of one of the metals mentioned above, an alloy of two or more of the metals mentioned above, or a coating material. The negative electrode current collector 210 may have, for example, a plate or foil shape. In an embodiment, the negative electrode current collector 210 may not be provided.

The coating layer 220 may induce growth of lithium metal between the coating layer 220 and the negative electrode current collector 210 when the all-solid-state battery 1000 is charged. The coating layer 220 may serve as a protection layer for lithium metal and simultaneously may suppress precipitation and growth of lithium dendrites.

The coating layer 220 may include metal and carbon. For example, the coating layer 220 may include at least one metal selected from gold (Au), platinum (Pt), palladium (Pd), silicon (Si), silver (Ag), aluminum (Al), bismuth (Bi), tin (Sn), and zinc (Zn). The coating layer 220 may include at least one carbon selected from carbon black, acetylene black, furnace black, ketjen black, and graphene. In an embodiment, the coating layer 220 may include a mixture of carbon black and silver (Ag).

The coating layer 220 may further include an additive in addition to metal and carbon. The coating layer 220 may include at least one additive selected from, for example, a binder, a filler, a coating agent, a dispersant, and an ionic conductivity agent.

The coating layer 220 may have a thickness less than that of the positive electrode active material layer 120. For example, the coating layer 220 may have a thickness that is equal to or less than about 50%, 40%, 30%, 20%, 10%, or 5% of that of the positive electrode active material layer 120. The thickness of the coating layer 220 may range, for example, from about 1 $\mu$m to about 20 $\mu$m, from about 2 $\mu$m to about 10 $\mu$m, or from about 3 $\mu$m to about 7 $\mu$m. When the coating layer 220 has an excessively small thickness, lithium dendrites formed between the coating layer 220 and the negative electrode current collector 210 may collapse the coating layer 220 to reduce cycle characteristics of the all-solid-state battery 1000. When the coating layer 220 has an excessively large thickness, the all-solid-state battery 1000 may have a reduced energy density, and an internal resistance of the all-solid-state battery 1000 may increase due to the coating layer 220, thereby reducing cycle characteristics of the all-solid-state battery 1000.

Although not shown, a carbon layer may further be included to increase adhesion between the coating layer 220 and the solid electrolyte layer 300.

In an embodiment, the solid electrolyte layer 300 may include a positive electrode solid electrolyte layer and a negative electrode solid electrolyte layer. The positive electrode solid electrolyte layer may be adjacent to the positive electrode layer 100, and the negative electrode solid electrolyte layer may be adjacent to the negative electrode layer 200. Each of the positive and negative electrode solid electrolyte layers may include the solid electrolyte discussed above.

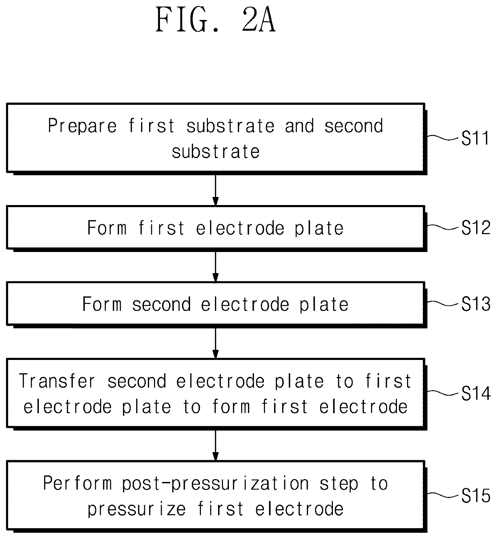

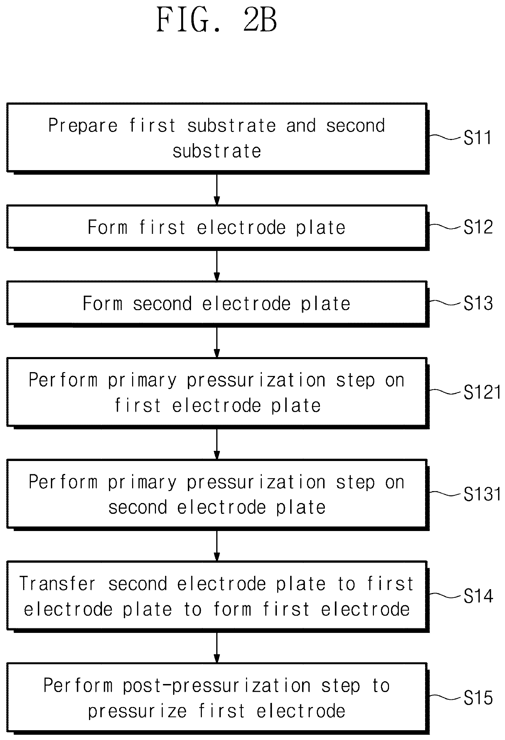

FIG. 2A illustrates a flow chart showing a method of fabricating an all-solid-state battery according to an embodiment of the present disclosure. FIG. 2B illustrates a flow chart showing a method of fabricating an all-solid-state battery according to an embodiment of the present disclosure. FIGS. 3 to 7 illustrate cross-sectional views showing a method of fabricating an all-solid-state battery according to an embodiment of the present disclosure.

Referring to FIG. 2A, a method of fabricating an all-solid-state battery according to the present disclosure may include preparing a first substrate and a second substrate (S11), forming a first electrode plate (S12), forming a second electrode plate (S13), providing the second electrode plate on the first electrode plate to form a first electrode (S14), and performing a post-pressurization step to pressurize the first electrode (S15).

Referring to FIG. 2B, a method of fabricating an all-solid-state battery according to the present disclosure may include preparing a first substrate and a second substrate (S11), forming a first electrode plate (S12), forming a second electrode plate (S13), performing a primary pressurization step on the first electrode plate (S121), performing a primary pressurization step on the second electrode plate (S131), providing the second electrode plate on the first electrode plate to form a first electrode (S14), and performing a post-pressurization step to pressurize the first electrode (S15).

A detailed explanation will be provided below with reference to FIGS. 3 to 7.

Referring to FIG. 3, a first substrate PRL1 may be prepared. A first mixture layer 121 may be provided on the first substrate PRL1. The first mixture layer 121 may be provided on the first substrate PRL1 to form a first electrode plate 1. For example, a first positive electrode slurry may be coated and dried on the first substrate PRL1 to form the first mixture layer 121. Thus, the first electrode plate 1 may be formed which includes the first substrate PRL1 and the first mixture layer 121.

A second substrate PRL2 may be prepared to face the first substrate PRL1. A second mixture layer 122 may be provided on the second substrate PRL2. The second mixture layer 122 may be provided on the second substrate PRL2 to form a second electrode plate 2. For example, a second positive electrode slurry may be coated and dried on the second substrate PRL2 to form the second mixture layer 122. Thus, the second electrode plate 1 may be formed which includes the second substrate PRL2 and the second mixture layer 122.

The first substrate PRL1 may be a current collector. The first substrate PRL1 may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

The first mixture layer 121 may include a positive electrode active material, a first solid electrolyte, a conductive material, and a binder.

Based on the total 100 parts by weight of the positive electrode active material, the first solid electrolyte, the conductive material, and the binder, the positive electrode active material may be included in an amount of about 83 parts by weight to about 92 parts by weight in the first mixture layer 121.

Based on the total 100 parts by weight of the positive electrode active material, the first solid electrolyte, the conductive material, and the binder, a weight ration of the first solid electrolyte may be equal to or less than about 15 parts by weight. For example, in the first mixture layer 121, a weight ratio of the first solid electrolyte may range from about 10 wt% to about 18 wt%.

Based on the total 100 parts by weight of the positive electrode active material, the first solid electrolyte, the conductive material, and the binder, the binder may be included in an amount of about 0.5 parts by weight to about 1.5 parts by weight in the first mixture layer 121.

Based on 100 parts by weight of the first solid electrolyte, the conductive material may be included in an amount of about 1 part by weight to about 10 parts by weight in the first mixture layer 121. When the conductive material is included in an amount of equal to or less than about 1 part by weight relative to 100 parts by weight of the first solid electrolyte, a proportion of the conductive material may decrease to reduce electrical conductivity of the first mixture layer 121. When the conductive material is included in an amount of equal to or greater than about 10 parts by weight relative to 100 parts by weight of the first solid electrolyte, a proportion of the conductive material may excessively increase to cause incomplete formation of a coating layer that covers a surface of the first solid electrolyte.

The first mixture layer 121 may further include an additive, such as a filler, a coating agent, a dispersant, and an ionic conductivity agent, in addition to the positive electrode active material, the first solid electrolyte, the conductive material, and the binder.

The second substrate PRL2 may be the same as the first substrate PRL1. The second mixture layer 122 may include a positive electrode active material, a second solid electrolyte, a conductive material, and a binder. The positive electrode active material may be included in an amount of about 65 parts by weight to about 90 parts by weight in the second mixture layer 122, and except that a weight ratio of the second solid electrolyte is about 20 wt% to about 40 wt% in the second mixture layer 122, the second mixture layer 122 may be the same as the first mixture layer 121. A weight ratio of the first solid electrolyte in the first electrode plate 1 may be less than that of the second solid electrolyte in the second electrode plate 2.

Referring back to FIG. 3, the first substrate PRL1 may have a non-treated first substrate thickness T41. The non-treated first substrate thickness T41 of the first substrate PRL1 may be defined to refer to a thickness in the case where no pressure is applied to the first substrate PRL1.

The first substrate PRL1 may be provided thereon with the first mixture layer 121 having a non-treated first mixture layer thickness T51. The non-treated first mixture layer thickness T51 may be defined to refer to a thickness in the case where no pressure is applied to the first mixture layer 121.

The first electrode plate 1 may have a non-treated first electrode plate thickness T61. The non-treated first electrode plate thickness T61 may be defined to refer to a thickness in the case where no pressure is applied to the first electrode plate 1. The non-treated first electrode plate thickness T61 of the first electrode plate 1 may be substantially the same as a sum of the non-treated first mixture layer thickness T51 and the non-treated first substrate thickness T41. In this description, the phrase "substantially the same" may indicate an average error range of about 5% more or less.

The second substrate PRL2 may have a non-treated second substrate thickness T11. The non-treated second substrate thickness T11 of the second substrate PRL2 may be defined to refer to a thickness in the case where no pressure is applied to the second substrate PRL2.

The second substrate PRL2 may be provided thereon with the second mixture layer 122 having a non-treated second mixture layer thickness T21. The non-treated second mixture layer thickness T21 may be defined to refer to a thickness in the case where no pressure is applied to the second mixture layer 122.

The second electrode plate 2 may have a non-treated second electrode plate thickness T31. The non-treated second electrode plate thickness T31 may be defined to refer to a thickness in the case where no pressure is applied to the second electrode plate 2. The non-treated second electrode plate thickness T31 of the second electrode plate 2 may be substantially the same as a sum of the non-treated second mixture layer thickness T21 and the non-treated second substrate thickness T11. In this description, the phrase "substantially the same" may indicate an average error range of about 5% more or less.

The first electrode plate 1 may include a coating layer including carbon. A coating layer may be additionally provided on the first mixture layer 121. In this case, the first electrode plate 1 may include the first substrate PRL1, the first mixture layer 121, and a coating layer. A thickness of the coating layer may be equal to or less than about 3 $\mu$m.

Referring to FIG. 4, the primary pressurization step S121 may be performed to pressurize the first electrode plate 1. After the first mixture layer 121 is provided on the first substrate plate PRL1 to form the first electrode plate 1, the first electrode plate 1 may be pressurized in the first primary pressurization step S121 of the first electrode plate 1. The primary pressurization step S121 may include pressurizing the first electrode plate 1 at a pressure of about 0.1 tons/cm to about 0.3 tons/cm. After the primary pressurization step S121 is performed on the first electrode plate 1, the first substrate PRL1, the first mixture layer 121, and the first electrode plate 1 may have their reduced thicknesses.

After the primary pressurization step S121, the first substrate PRL1 may have a primary-pressurization-treated first substrate thickness T42. The treated first substrate thickness T42 may be less than the non-treated first substrate thickness T41.

After the primary pressurization step S121, the first mixture layer 121 may have a primary-pressurization-treated first mixture layer thickness T52. The treated first mixture layer thickness T52 may be less than the non-treated first mixture layer thickness T51.

After the primary pressurization step S121, the first electrode plate 1 may have a primary-pressurization-treated first electrode plate thickness T62. The treated first electrode plate thickness T62 may be less than the non-treated first electrode plate thickness T61.

Simultaneously with or sequentially after the primary pressurization step S121, a primary pressurization step S131 may be performed on the second electrode plate 2. In the primary pressurization step S131, the second electrode plate 2 may be pressurized. After the second mixture layer 122 is provided on the second substrate plate PRL2 to form the second electrode plate 2, the second electrode plate 2 may be pressurized in the first primary pressurization step S131 of the second electrode plate 2. The primary pressurization step S131 of the second electrode plate 2 may include pressurizing the second electrode plate 2 at a pressure of about 0.1 tons/cm to about 0.3 tons/cm. After the primary pressurization step S131 is performed on the second electrode plate 2, the second substrate PRL2, the second mixture layer 122, and the second electrode plate 1 may have their reduced thicknesses.

After the primary pressurization step S131, the second substrate PRL2 may have a primary-pressurization-treated second substrate thickness T12. The treated second substrate thickness T12 may be less than the non-treated second substrate thickness T11.

After the primary pressurization step S131, the second mixture layer 122 may have a primary-pressurization-treated second mixture layer thickness T22. The treated second mixture layer thickness T22 may be less than the non-treated second mixture layer thickness T21.

After the primary pressurization step S131, the second electrode plate 2 may have a primary-pressurization-treated second electrode plate thickness T32. The treated second electrode plate thickness T32 may be less than the non-treated second electrode plate thickness T31.

The treated first electrode plate thickness T62 may be substantially the same as a sum of the treated first mixture layer thickness T52 and the treated first substrate thickness T42.

The treated second electrode plate thickness T32 may be substantially the same as a sum of the treated second mixture layer thickness T22 and the treated second substrate thickness T12.

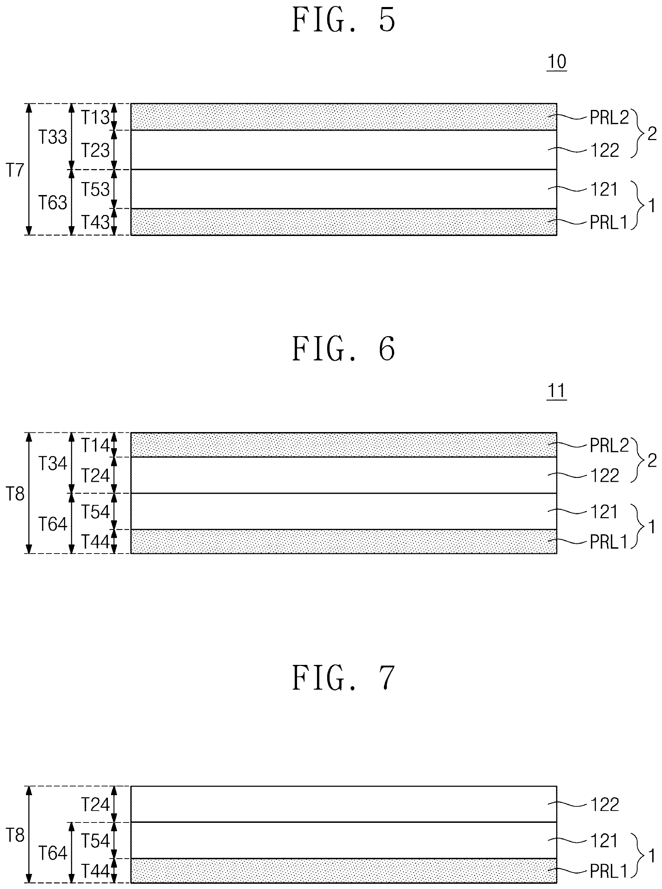

Referring to FIG. 5, the step S14 may be performed such that the second electrode plate 2 is transferred to the first electrode plate 1 to form a first electrode 10. The step S14 of forming the first electrode 10 may include allowing the second mixture layer 122 of the second electrode plate 2 to come into face-to-face contact with the first mixture layer 121 of the first electrode plate 1.

The step S14 of forming the first electrode 10 may performing a pre-pressurization step in which the first electrode plate 1 and the second electrode plate 2 are pressurized while facing each other. In this case, the pre-pressurization step may include pressurizing the first electrode plate 1 and the second electrode plate 2 at a pressure of about 0.3 tons/cm to about 0.5 tons/cm.

As the step S14 includes facing and pressurizing the first electrode plate 1 and the second electrode plate 2, each of the first electrode plate 1 and the second electrode plate 2 may have a reduced thickness. For example, the first electrode plate 1 of the first electrode 10 may have a thickness T63 less than the treated first electrode plate thickness T62. The second electrode plate 2 of the first electrode 10 may have a thickness T33 less than the treated second electrode plate thickness T32.

A thickness T7 of the first electrode 10 may be a sum of the thickness T63 of the first electrode plate 1 and the thickness T33 of the second electrode plate 2. The thickness T7 of the first electrode 10 may be less than a sum of the treated first electrode plate thickness T62 and the treated second electrode plate thickness T32.

The first substrate PRL1 of the first electrode 10 may have a thickness T43 less than the treated first substrate thickness T42. The first mixture layer 121 of the first electrode 10 may have a thickness T53 less than the treated first mixture layer thickness T52.

The second substrate PRL2 of the first electrode 10 may have a thickness T13 less than the treated second substrate thickness T12. The second mixture layer 122 of the first electrode 10 may have a thickness T23 less than the treated second mixture layer thickness T22.

Referring to FIG. 6, the post-pressurization step S15 may be performed to pressurize the first electrode 10. The first electrode 10 may be post-pressurized to form a first pressurized electrode 11. The post-pressurization step S15 may further include cooling the second electrode plate 2. The cooling step of the second electrode late 2 may include using liquid nitrogen to cool the second electrode plate 2. The post-pressurization step S15 may include pressurizing the first electrode plate 1 at a pressure of about 2.0 tons/cm to about 2.5 tons/cm.

The cooling step of the second electrode plate 2 may include, for example, treating the first electrode 10 for about 10 minutes to about 20 minutes at about -200°C to about -196°C under a liquid nitrogen atmosphere.

The first pressurized electrode 11 may be formed by cooling the second electrode plate 2 of the first electrode and pressurizing the first electrode 10.

A thickness T8 of the first pressurized electrode 11 may be less than the thickness T7 of the first electrode 10. The first electrode plate 1 of the first pressurized electrode 11 may have a thickness T64 less than a thickness T63 of the first electrode plate 1 of the first electrode 10. The second electrode plate 2 of the first pressurized electrode 11 may have a thickness T34 less than a thickness T33 of the second electrode plate 2 of the first electrode 10. The first substrate PRL1 of the first pressurized electrode 11 may have a thickness T44 less than a thickness T43 of the first substrate PRL1 of the first electrode 10. The second substrate PRL2 of the first pressurized electrode 11 may have a thickness T14 less than a thickness T13 of the second substrate PRL2 of the first electrode 10.

Referring to FIG. 7, a step may be performed to remove the second substrate PRL2 that is cooled after the post-pressurization step S15. Since the second electrode plate 2 is cooled in the post-pressurization step S15, the second substrate PRL2 may be more easily removed capered to when the second substrate PRL2 is not cooled.

In the second electrode plate 2 where the first electrode 10 is cooled under a liquid nitrogen atmosphere, the second substrate PRL2 on the second electrode plate 2 may be removed. The second substrate PRL2 may be cooled as discussed above, and thus may be more easily removed.

A solid electrolyte layer and a negative electrode plate may be stacked on the second mixture layer 122 exposed due to the removal of the second substrate PRL2. Accordingly, an all-solid-state battery may be fabricated.

In an embodiment of the all-solid-state battery fabricated through the method discussed above, based on the positive electrode active material layer 120 positioned on one side of the positive electrode current collector 110, the positive electrode active material layer 120 may have a loading level of about 15 mg/cm$^2$ to about 60 mg/cm$^2$. For example, the positive electrode active material layer 120 positioned on one side of the positive electrode current collector 110 may have a loading level of about 15 mg/cm$^2$ to about 60 mg/cm$^2$, preferably about 30 mg/cm$^2$ to 35 mg/cm$^2$. Alternatively, when the positive electrode active material layers 120 are coated on opposite sides of the positive electrode current collector 110 may have a total loading level of about 30 mg/cm$^2$ to about 120 mg/cm$^2$. In this description, the expression "a loading level of the positive electrode active material layer" may refer to a weight of positive electrode material per unit area of the positive electrode active material layer.

The second electrode plate 2 of the all-solid-state battery fabricated through the method discussed above may be treated with liquid nitrogen. One lateral surface of the second electrode plate 2 may be in contact with the first electrode plate 1, and another lateral surface of the second electrode plate 2 may be in contact with the solid electrolye layer.

Embodiment 1

(Manufacture of Positive Electrode)

A powder of LiNi$_{0.8}$Co$_{0.15}$Mn$_{0.05}$O$_2$ (NCM) was prepared as a positive electrode active material. There were prepared argyrodite-type first solid electrolyte particles (Li$_6$PS$_5$Cl) with an average particle diameter (D$_{50}$) of 1 μm as a solid electrolyte, polyvinylidene fluoride (PVdF) as a binder, and carbon nano-fiber (CNF) as a conductive material.

The positive electrode active material, the solid electrolyte, the conductive material, and the binder were mixed in a weight ratio of 85:13.5:0.5:1 in an octyl acetate solvent to prepare a first positive electrode slurry. The first positive electrode slurry was coated on an aluminum positive electrode current collector, and then dried and pressed to manufacture a positive electrode plate.

A powder of LiNi$_{0.8}$Co$_{0.15}$Mn$_{0.05}$O$_2$ (NCM) was prepared as a positive electrode active material. There were prepared argyrodite-type second solid electrolyte particles (Li$_6$PS$_5$Cl) with an average particle diameter (D$_{50}$) of 1 μm as a solid electrolyte, polyvinylidene fluoride (PVdF) as a binder, and carbon nano-fiber (CNF) as a conductive material.

The positive electrode active material, the solid electrolyte, the conductive material, and the binder were mixed in a weight ratio of 78.5:20:0.5:1 in an N-methyl pyrrolidone solvent to prepare a second positive electrode slurry. The second positive electrode slurry was coated on an aluminum substrate, and then dried and pressed to manufacture a second electrode plate.

The first electrode plate and the second electrode plate were in face-to-face contact with each other, and then cooled for 15 minutes at -196°C under a liquid nitrogen atmosphere while being pressurized at 2.5 tons/cm.

Afterwards, the aluminum substrate on the second positive electrode slurry was removed.

(Manufacture of Solid Electrolyte Layer)

Argyrodite-type third solid electrolyte particles (Li$_6$PS$_5$Cl) with an average particle diameter (D$_{50}$) of 3 μm was added to an isobutyryl isobutyrate binder solution added with a butyl acrylate-based polymer to prepare a solid electrolyte slurry (the solid electrolyte and the binder were mixed in a weight ratio of 98.7:1.3). The prepared solid electrolyte slurry was coated on a release polytetrafluoroethylene film, and dried for 2 hours at 60°C to manufacture a solid electrolyte layer of 100 μm in thickness.

(Manufacture of Negative Electrode)

90 wt% of Ag nano-particles (D$_{50}$: 60 nm) and 10 wt% of carbon black were mixed in a water solvent to prepare a negative electrode coating layer slurry. A mixture of single particles with a particle diameter of 38 nm and secondary particles was used as the carbon black, and the secondary particle was composed of primary particles with a particle diameter of 76 nm and had a particle size of 275 nm. The slurry was coated on a stainless still foil as a current collector, and then dried to manufacture a negative electrode including a negative electrode coating layer of 12 μm in thickness and a current collector of 10 μm in thickness.

(Fabrication of All-Solid-State Battery)

The positive electrode, the solid electrolyte layer, and the negative electrode were stacked, and an isostatic press was performed for about 30 minutes at a temperature of 85°C under a pressure of 500 MPa, thereby fabricating an all-solid-state battery.

Embodiment 2

An all-solid-state battery was fabricated in the same method as in Embodiment 1, except that the positive electrode active material, the solid electrolyte, the conductive material, and the binder were mixed in a weight ratio of 87:11.5:0.5:1 when the first positive electrode slurry was prepared in manufacturing the first electrode plate.

Embodiment 3

An all-solid-state battery was fabricated in the same method as in Embodiment 1, except that the positive electrode active material, the solid electrolyte, the conductive material, and the binder were mixed in a weight ratio of 83:15.5:0.5:1 when the first positive electrode slurry was prepared in manufacturing the first electrode plate.

Embodiment 4

An all-solid-state battery was fabricated in the same method as in Embodiment 1, except that the positive electrode active material, the solid electrolyte, the conductive material, and the binder were mixed in a weight ratio of 73.5:25:0.5:1 when the second positive electrode slurry was prepared in manufacturing the second electrode plate.

Embodiment 5

An all-solid-state battery was fabricated in the same method as in Embodiment 1, except that the positive electrode active material, the solid electrolyte, the conductive material, and the binder were mixed in a weight ratio of 68.5:30:0.5:1 when the second positive electrode slurry was prepared in manufacturing the second electrode plate.

Comparative 1

(Manufacture of Positive Electrode)

A powder of $LiNi_{0.8}Co_{0.15}Mn_{0.05}O_2$ (NCM) was prepared as a positive electrode active material. There were prepared argyrodite-type first solid electrolyte particles ($Li_6PS_5Cl$) with an average particle diameter ($D_{50}$) of 1 $\mu$m as a solid electrolyte, polyvinylidene fluoride (PVdF) as a binder, and carbon nano-fiber (CNF) as a conductive material. The positive electrode active material, the solid electrolyte, the conductive material, and the binder were mixed in a weight ratio of 85:13.5:0.5:1 in an N-methyl pyrrolidone solvent to prepare a first positive electrode slurry.

A powder of $LiNi_{0.8}Co_{0.15}Mn_{0.05}O_2$ (NCM) was prepared as a positive electrode active material. There were prepared argyrodite-type second solid electrolyte particles ($Li_6PS_5Cl$) with an average particle diameter ($D_{50}$) of 1 $\mu$m as a solid electrolyte, polyvinylidene fluoride (PVdF) as a binder, and carbon nano-fiber (CNF) as a conductive material. The positive electrode active material, the solid electrolyte, the conductive material, and the binder were mixed in a weight ratio of 78.5:20:0.5:1 in an N-methyl pyrrolidone solvent to prepare a second positive electrode slurry.

The first positive electrode slurry and the second positive electrode slurry were sequentially coated on an aluminum positive electrode current collector, and then dried and pressed to manufacture as first positive electrode plate.

(Manufacture of Solid Electrolyte Layer)

Argyrodite-type third solid electrolyte particles ($Li_6PS_5Cl$) with an average particle diameter ($D_{50}$) of 3 $\mu$m was added to an isobutyryl isobutyrate binder solution added with a butyl acrylate-based polymer to prepare a solid electrolyte slurry (the solid electrolyte and the binder were mixed in a weight ratio of 98.7:1.3). The prepared solid electrolyte slurry was coated on a release polytetrafluoroethylene film, and dried for 2 hours at 60°C to manufacture a solid electrolyte layer of 100 $\mu$m in thickness.

(Manufacture of Negative Electrode)

90 wt% of Ag nano-particles ($D_{50}$: 60 nm) and 10 wt% of carbon black were mixed in a water solvent to prepare a negative electrode coating layer slurry. A mixture of single particles with a particle diameter of 38 nm and secondary particles was used as the carbon black, and the secondary particle was composed of primary particles with a particle diameter of 76 nm and had a particle size of 275 nm. The slurry was coated on a stainless still foil as a current collector, and then dried to manufacture a negative electrode including a negative electrode coating layer of 12 $\mu$m in thickness and a current collector of 10 $\mu$m in thickness.

(Fabrication of All-Solid-State Battery)

The positive electrode, the solid electrolyte layer, and the negative electrode were stacked, and an isostatic press was performed for about 30 minutes at a temperature of 85°C under a pressure of 500 MPa, thereby fabricating an all-solid-state battery.

Comparative 2

A positive electrode, a solid electrolyte layer, a negative electrode, and an all-solid-state battery were fabricated in the same method as in Embodiment 1, except that the positive electrode active material, the solid electrolyte, the conductive material, and the binder were mixed in a weight ratio of 85:13.5:0.5:1 when the second positive electrode slurry was prepared.

Comparative 3

A positive electrode, a solid electrolyte layer, a negative electrode, and an all-solid-state battery were fabricated in the same method as in Embodiment 1, except that the positive electrode active material, the solid electrolyte, the conductive material, and the binder were mixed in a weight ratio of 81:17.5:0.5:1 when the first positive electrode slurry was prepared.

Evaluation 1: Ionic Conductivity of Positive Electrode

The following method was employed to measure ionic conductivities of cells according to some examples and comparative examples. Each of the positive electrodes in Embodiments 1 to 5 and Comparatives 1 to 3 was sampled with a thickness of 150 $\mu$m and a diameter of 12 mm. An impedance analyzer (Solartron 1260A Impedance/Gain-Phase Analyzer) was used to measure impedance in accordance with a 2-probe method and to obtain an Nyquist plot (25°C, frequency range: 500 kHz to 50 mHz, amplitude voltage: 50 mV ). Based on the measured Nyquist plot results, an equivalent circuit model was applied for fitting to calculate electronic conductivity and ionic conductivity of the cell. The results are listed in Table 1.

[Table 1]

|  | Ionic conductivity [mS/cm] | Electronic conductivity [mS/cm] |
|---|---|---|
| Embodiment 1 | 0.122 | 0.683 |
| Embodiment 2 | 0.115 | 0.694 |
| Embodiment 3 | 0.149 | 0.671 |
| Embodiment 4 | 0.166 | 0.619 |
| Embodiment 5 | 0.17 | 0.588 |
| Comparative 1 | 0.07 | 0.381 |
| Comparative 2 | 0.025 | 0.510 |
| Comparative 3 | 0.145 | 0.024 |

Referring to Table 1, it may be observed that the ionic conductivity and the electronic conductivity of the positive electrode according to Embodiment 1 are less than those of the positive electrodes according to Comparatives 1 to 3. The low ionic conductivity of Comparative 1 and the low electronic conductivity of Comparative 3 cause high resistances during battery operations to limit outputs. It may be ascertained that both of the ionic conductivity and the electronic conductivity are excellent in the case of Embodiments.

Evaluation 2: Lifetime Characteristics

The all-solid-state batteries according to Embodiments 1 to 5 and Comparatives 1 to 3 were charged and discharged. A first charge and discharge was performed at 45° under the following condition. Charge (0.33 C, CC/CV charge, 4.25 V, 0.05 C cut) and discharge (0.33 C, CC discharge, 3.0 V cut). The charge and discharge was performed under the following condition at a second time and thereafter. Charge (1.0 C, CC/CV charge, 4.25 V, 0.05 C cut) and discharge (0.5 C, CC discharge, 3.0 V cut). A cycle count (cyc) at which capacity retention rate (SOH) reaches 80% after repeated charge and discharge was defined as lifetime characteristics. The charge retention rate at an $N^{th}$ cycle was calculated according to Equation 2.

Capacity retention rate [%] = (discharge capacity at $N^{th}$ cycle / discharge capacity at first cycle) $\times$ 100      [Equation 2]

[Table 2]

|  | Lifetime characteristics (the number of charge-discharge cycles when SOH reaches 80%) |
|---|---|
| Embodiment 1 | 200 |
| Embodiment 2 | 200 |

(continued)

|  | Lifetime characteristics (the number of charge-discharge cycles when SOH reaches 80%) |
| --- | --- |
| Embodiment 3 | 200 |
| Embodiment 4 | 190 |
| Embodiment 5 | 180 |
| Comparative 1 | 130 |
| Comparative 2 | 10 |
| Comparative 3 | 10 |

As shown in Table 2, it may be observed that the lifetime characteristics of Embodiments 1 to 5 are superior to those of Comparatives 1 to 3.

According to an all-solid-state battery and its fabrication method in accordance with the present disclosure, a coating amount of an active material layer may increase to manufacture an electrode plate with a high current density.

According to a method of fabricating an all-solid-state battery according to the present disclosure, it may be easy to fabricate and suitable for mass production.

While this disclosure has been described in connection with what is presently considered to be preferred embodiments, it is to be understood that the present disclosure is not limited to the disclosed embodiments and is intended to cover various modifications and equivalent arrangements included within the spirit and scope of the appended claims, and therefore the aforementioned embodiments should be understood to be exemplarily but not limiting this disclosure in any way.

Reference sign list

1000　All-solid-state battery
100　Positive electrode layer
110　Positive electrode current collector
120　Positive electrode active material layer
200　Negative electrode layer
210　Negative electrode current collector
220　Coating layer on negative electrode
300　Solid electrolyte layer
1　First electrode plate
2　Second electrode plate
10　First electrode (after stacking)
11　First pressurized electrode
121　First mixture layer (on PRL1)
122　Second mixture layer (on PRL2)
PRL1　First substrate (current collector)
PRL2　Second substrate (current collector)
S11　Preparing first and second substrates
S12　Forming first electrode plate
S13　Forming second electrode plate
S14　Transferring/stacking to form first electrode
S15　Post-pressurization step
S121　Primary pressurization of first electrode plate
S131　Primary pressurization of second electrode plate
T11　Thickness of second substrate (before pressurization)
T12　Thickness of second substrate (after pressurization)
T21　Thickness of second mixture layer (before pressurization)
T22　Thickness of second mixture layer (after pressurization)
T31　Thickness of second electrode plate (before pressurization)
T32　Thickness of second electrode plate (after pressurization)

**EP 4 738 445 A1**

T33    Thickness of second electrode plate (pre-pressurization)
T34    Thickness of second electrode plate (post-pressurization)
T41    Thickness of first substrate (before pressurization)
T42    Thickness of first substrate (after pressurization)
T43    Thickness of first substrate (pre-pressurization)
T44    Thickness of first substrate (post-pressurization)
T51    Thickness of first mixture layer (before pressurization)
T52    Thickness of first mixture layer (after pressurization)
T53    Thickness of first mixture layer (pre-pressurization)
T61    Thickness of first electrode plate (before pressurization)
T62    Thickness of first electrode plate (after pressurization)
T63    Thickness of first electrode plate (pre-pressurization)
T64    Thickness of first electrode plate (post-pressurization)
T7     Total thickness of first electrode
T8     Total thickness of first pressurized electrode

**Claims**

1.  A method of fabricating an all-solid-state battery (1000), the method comprising:

    (S11) preparing a first substrate (PRL1) and a second substrate (PRL2);
    (S12) preparing a first electrode plate (1) by forming a first mixture layer (121) on the first substrate (PRL1);
    (S13) preparing a second electrode plate (2) by forming a second mixture layer (122) on the second substrate (PRL2);
    (S14) forming a first electrode (10) by transferring the second mixture layer (122) of the second electrode plate (2) to the first mixture layer (121) of the first electrode plate (1); and
    (S15) performing a post-pressurization step to pressurize the first electrode (10),
    wherein forming the first electrode (10) comprises performing a pre-pressurization step in which the first electrode plate (1) and the second electrode plate (2) are pressurized while facing each other, and
    wherein the post-pressurization step further comprises cooling the second electrode plate (2).

2.  The method of claim 1, wherein

    forming the first mixture layer (121) comprises coating a first positive electrode slurry on the first substrate (PRL1), and
    forming the second mixture layer (122) comprises coating a second positive electrode slurry on the second substrate (PRL2).

3.  The method of any of claims 1 to 2, wherein before transferring the second mixture layer (122) to the first mixture layer (121), the method further comprises:

    (S121) performing a primary pressurization step to pressurize the first electrode plate (1); and
    (S131) performing a primary pressurization step to pressurize the second electrode plate (2).

4.  The method of claim 3, wherein

    the primary pressurization step of the first electrode plate (1) is performed such that the first electrode plate (1) is pressurized at 0.1 tons/cm to 0.3 tons/cm, and
    the primary pressurization step of the second electrode plate (2) is performed such that the second electrode plate (2) is pressurized at 0.1 tons/cm to 0.3 tons/cm.

5.  The method of any of claims 1 to 4, further comprising removing the second substrate (PRL2) that is cooled after the post-pressurization step.

6.  The method of any of claims 1 to 5, wherein the first substrate (PRL1) and the second substrate (PRL2) comprise aluminum.

7.  The method of any of claims 1 to 6, wherein the post-pressurization step comprises pressurizing the first electrode (10)

13

at 2.0 tons/cm to 2.5 tons/cm.

8. The method of any of claims 1 to 7, wherein the pre-pressurization step comprises arranging the first electrode plate (1) and the second electrode plate (2) to face each other and pressurizing the first electrode plate (1) and the second electrode plate (2) at 0.3 tons/cm to 0.5 tons/cm.

9. The method of any of claims 1 to 8, wherein

the first mixture layer (121) comprises a first solid electrolyte,
the second mixture layer (122) comprises a second solid electrolyte,
a weight ratio of the first solid electrolyte in the first mixture layer (121) is 10 wt% to 18 wt% with respect to the first mixture layer (121), and
a weight ratio of the second solid electrolyte in the second mixture layer (122) is 20 wt% to 40 wt% with respect to the second mixture layer (122).

10. The method of any of claims 1 to 9, wherein cooling the second electrode plate (2) is performed by using liquid nitrogen.

11. An all-solid-state battery (1000), the all-solid-state battery (1000) preferably being produced by a method according to any of the previous claims, the all-solid-state battery (1000) comprising:

a positive electrode (100), the positive electrode comprising a positive electrode current collector (110), a first mixture layer (121) on the positive electrode current collector (110), and a second mixture layer (122) on the first mixture layer (121);
a solid electrolyte layer (300) on the second mixture layer (122); and
a negative electrode layer (200) on the solid electrolyte layer (300),
wherein the first mixture layer (121) comprises a first positive electrode active material and a first solid electrolyte,
wherein the second mixture layer (122) comprises a second positive electrode active material and a second solid electrolyte, and
wherein a weight ratio of the first solid electrolyte in the first mixture layer (121) is less than a weight ratio of the second solid electrolyte in the second mixture layer (122).

12. The all-solid-state battery (1000) of claim 11, wherein

the weight ratio of the first solid electrolyte in the first mixture layer (121) is 10 wt% to 18 wt% with respect to the first mixture layer (121), and
the weight ratio of the second solid electrolyte in the second mixture layer (122) is 20 wt% to 40 wt% with respect to the second mixture layer (122).

13. The all-solid-state battery (1000) of any of claims 11 or 12, further comprising a coating layer between the first mixture layer (121) and the second mixture layer (122), the coating layer comprising carbon.

14. The all-solid-state battery of claim 13, wherein a thickness of the coating layer is not more than 3 $\mu$m.

15. The all-solid-state battery of any of claims 11 to 14, wherein a loading level on one side of a mixture layer (120) comprising the first mixture layer (121) and the second mixture layer (122) is 30 mg/cm$^2$ to 35 mg/cm$^2$.

# FIG. 1

# FIG. 2A

| Prepare first substrate and second substrate | S11 |

| Form first electrode plate | S12 |

| Form second electrode plate | S13 |

| Transfer second electrode plate to first electrode plate to form first electrode | S14 |

| Perform post-pressurization step to pressurize first electrode | S15 |

# FIG. 2B

Prepare first substrate and second substrate — S11

↓

Form first electrode plate — S12

↓

Form second electrode plate — S13

↓

Perform primary pressurization step on first electrode plate — S121

↓

Perform primary pressurization step on second electrode plate — S131

↓

Transfer second electrode plate to first electrode plate to form first electrode — S14

↓

Perform post-pressurization step to pressurize first electrode — S15

# FIG. 3

# FIG. 4

# FIG. 5

# FIG. 6

# FIG. 7

Europäisches
Patentamt

European
Patent Office

Office européen
des brevets

# EUROPEAN SEARCH REPORT

**Application Number**

EP 25 21 2663

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 102 468 476 B (TOYOTA MOTOR CO LTD) 3 September 2014 (2014-09-03) * Paragraph: "First Embodiment" * ----- | 11,12, 14,15 | INV. H01M4/04 H01M10/0562 H01M10/0585 |
| X | CN 118 825 202 A (YUANJING POWER TECHNOLOGY ORDOS CO LTD) 22 October 2024 (2024-10-22) * example 1 * * paragraphs [0007], [0041], [0052] * ----- | 11,12, 14,15 | |
| A | KR 2024 0079953 A (SAMSUNG SDI CO LTD [KR]) 5 June 2024 (2024-06-05) * claim 1 * * example 1 * ----- | 1-15 | |
| A | EP 4 064 390 A1 (SK ON CO LTD [KR]) 28 September 2022 (2022-09-28) * paragraphs [0136] - [0137] * * claim 1 * ----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 4 March 2026 | Galbiati, Ivano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

EP 4 738 445 A1

## ANNEX TO THE EUROPEAN SEARCH REPORT
## ON EUROPEAN PATENT APPLICATION NO.

EP 25 21 2663

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2026

| Patent document cited in search report | | Publication date | Patent family member(s) | | Publication date |
|---|---|---|---|---|---|
| CN 102468476 | B | 03-09-2014 | CN | 102468476 A | 23-05-2012 |
| | | | JP | 5413355 B2 | 12-02-2014 |
| | | | JP | 2012104270 A | 31-05-2012 |
| | | | US | 2012115028 A1 | 10-05-2012 |
| CN 118825202 | A | 22-10-2024 | NONE | | |
| KR 20240079953 | A | 05-06-2024 | CN | 120283309 A | 08-07-2025 |
| | | | EP | 4629311 A1 | 08-10-2025 |
| | | | JP | 2025541728 A | 23-12-2025 |
| | | | KR | 20240079953 A | 05-06-2024 |
| | | | US | 2025385263 A1 | 18-12-2025 |
| | | | WO | 2024117675 A1 | 06-06-2024 |
| EP 4064390 | A1 | 28-09-2022 | CN | 114944473 A | 26-08-2022 |
| | | | DE | 202022002812 U1 | 13-07-2023 |
| | | | EP | 4064390 A1 | 28-09-2022 |
| | | | KR | 20220116926 A | 23-08-2022 |
| | | | KR | 20250142836 A | 30-09-2025 |
| | | | US | 2022271278 A1 | 25-08-2022 |

EPO FORM P0459

For more details about this annex : see Official Journal of the European Patent Office, No. 12/82

**EP 4 738 445 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240154347